(19) Europäisches Patentamt
European Patent Office
Office européen des brevets

(11) EP 3 657 582 A1

(12) EUROPEAN PATENT APPLICATION
published in accordance with Art. 153(4) EPC

(43) Date of publication:
27.05.2020 Bulletin 2020/22

(51) Int Cl.:
H01M 4/62 (2006.01)   H01M 4/14 (2006.01)
H01M 10/08 (2006.01)

(21) Application number: 18862070.2

(22) Date of filing: 12.07.2018

(86) International application number:
PCT/JP2018/026256

(87) International publication number:
WO 2019/064821 (04.04.2019 Gazette 2019/14)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 28.09.2017 JP 2017187502

(71) Applicant: GS Yuasa International Ltd.
Kyoto-shi, Kyoto 601-8520 (JP)

(72) Inventors:
• ITO, Etsuko
Kyoto-shi
Kyoto 601-8520 (JP)

• NAGATO, Daisuke
Kyoto-shi
Kyoto 601-8520 (JP)
• ANDO, Kazunari
Kyoto-shi
Kyoto 601-8520 (JP)

(74) Representative: Isarpatent
Patent- und Rechtsanwälte Behnisch Barth Charles
Hassa Peckmann & Partner mbB
Friedrichstrasse 31
80801 München (DE)

(54) LEAD STORAGE CELL

(57) A lead-acid battery includes a positive electrode plate, and a negative electrode plate having a current collector and a negative electrode material supported by the current collector. The negative electrode material contains fibers at a ratio of 0.05% by mass or more and 0.40% by mass or less. An average length of the fibers is 1 mm or more and 6 mm or less, and an average volume specific resistance value of the fibers is $10^3$ $\Omega\cdot$cm or more and less than $10^9$ $\Omega\cdot$cm.

Fig. 2

**Description**

TECHNICAL FIELD

The technology disclosed in the present specification relates to a lead-acid battery.

BACKGROUND ART

Lead-acid batteries are widely used as secondary batteries. For example, the lead-acid battery is mounted on a vehicle such as an automobile, and is used as a power supply source for a starter at the time of an engine starting and a power supply source for various electric components such as lights.

The lead-acid battery includes a positive electrode plate and a negative electrode plate. The positive electrode plate and the negative electrode plate each include a current collector and an active material supported by the current collector.

Conventionally, there is known a technique in which a reinforcing short fiber is contained in an active material in order to improve life characteristics of a lead-acid battery by increasing strength of the active material (for example, see Patent Document 1).

PRIOR ART DOCUMENT

PATENT DOCUMENT

Patent Document 1: JP-A-2000-36305

SUMMARY OF THE INVENTION

PROBLEMS TO BE SOLVED BY THE INVENTION

Conventionally, when fibers are contained in a negative electrode material (active material) constituting a negative electrode plate, consideration has been given to preventing the negative electrode material from falling off from a current collector. The inventor of the present application has made intensive studies and as a result newly found that, when a specific configuration is adopted as a configuration of a negative electrode material containing fibers, it is possible to prevent the negative electrode material from falling off from a current collector and to improve life characteristics (in particular, life characteristics (hereinafter referred to as "PSOC (Partial State of Charge, incompletely charged state) cycle life characteristics") obtained when a charge-discharge cycle in PSOC is repeated) of a lead-acid battery.

The present specification discloses a technique capable of improving life characteristics (in particular, PSOC cycle life characteristics) of a lead-acid battery while preventing a negative electrode material from falling off from a current collector in a negative electrode plate of the lead-acid battery.

MEANS FOR SOLVING THE PROBLEMS

The lead-acid battery disclosed in the present specification includes a positive electrode plate and a negative electrode plate having a current collector and a negative electrode material supported by the current collector. In this lead-acid battery, the negative electrode material contains fibers at a ratio of 0.05% by mass or more and 0.40% by mass or less, an average length of the fibers is 1 mm or more and 6 mm or less, and an average volume specific resistance value of the fibers is $10^3$ $\Omega \cdot$cm or more and less than $10^9$ $\Omega \cdot$cm.

BRIEF DESCRIPTION OF THE DRAWINGS

Fig. 1 is a perspective view showing an appearance configuration of a lead-acid battery 100 in the present embodiment.
Fig. 2 is an explanatory view showing a Y-Z cross-sectional configuration of the lead-acid battery 100 taken along line II-II of Fig. 1.
Fig. 3 is an explanatory view showing a Y-Z cross-sectional configuration of the lead-acid battery 100 taken along line III-III of Fig. 1.
Fig. 4 is an explanatory view showing performance evaluation results.

Fig. 5 is an explanatory view showing performance evaluation results.

MODE FOR CARRYING OUT THE INVENTION

The technology disclosed in present specification may be implemented by the following aspects.

(1) The lead-acid battery disclosed in the present specification includes a positive electrode plate and a negative electrode plate having a current collector and a negative electrode material supported by the current collector. In this lead-acid battery, the negative electrode material contains fibers at a ratio of 0.05% by mass or more and 0.40% by mass or less, an average length of the fibers is 1 mm or more and 6 mm or less, and an average volume specific resistance value of the fibers is $10^3$ $\Omega \cdot$cm or more and less than $10^9$ $\Omega \cdot$cm. The negative electrode plate includes a current collector and a negative electrode material (active material, additive, and others). That is, the negative electrode material is obtained by removing the current collector from the negative electrode plate, and is generally called an "active material". The inventor of the present application has made intensive studies and as a result newly found that by adopting the configuration of the negative electrode material as described above, it is possible to improve life characteristics (in particular, PSOC cycle life characteristics) of the lead-acid battery while preventing the negative electrode material from falling off from the current collector in the negative electrode plate. The reason why such an effect can be obtained by employing the configuration as described above is not necessarily clear, but is presumed as follows.

It is considered that if the length of the fibers contained in the negative electrode material is excessively short, each fiber is in a state close to powder, and each fiber cannot sufficiently restrain the negative electrode material, so that the effect of preventing the negative electrode material from falling off due to fibers is reduced. On the other hand, it is considered that if the length of the fibers is excessively long, fiber agglomerates (location where there are fiber clumps) are formed when a paste is mixed for preparing the negative electrode material, and a location where the amount of fibers is excessively small is generated in the negative electrode material prepared with the paste, so that the effect of preventing the negative electrode material from falling off due to fibers is reduced. By contrast, in the lead-acid battery disclosed in the present specification, the average length of the fibers contained in the negative electrode material is 1 mm or more and 6 mm or less, and the average length of the fibers is not excessively short or long. Thus, according to the lead-acid battery disclosed in the present specification, it is considered that it is possible to prevent the negative electrode material from falling off from the current collector.

If the volume specific resistance value of the fiber contained in the negative electrode material is excessively high, when a paste is mixed for preparing the negative electrode material, surfaces of the fiber and an additive (for example, carbon, lignin, or barium sulfate) other than fiber are likely to be charged by friction, so that the additive is likely to aggregate due to generation of an electrostatic attraction, and dispersibility (small distribution of fibers) of the additive in the paste is reduced. Thus, it is considered that in the negative electrode plate having the negative electrode material prepared with the paste, the reactivity is reduced at a location where the additive is insufficient, and as a result, sulfation (crystallization of lead sulfate) occurs at a low reactivity location on the negative electrode plate, so that the life characteristics (in particular, PSOC cycle life characteristics) of the lead-acid battery are deteriorated. On the other hand, if fibers (for example, carbon fibers) having an excessively low volume specific resistance value are used as the fibers contained in the negative electrode material, the fibers themselves are likely to aggregate when the paste is mixed, and as a result, the dispersibility in the fibers in the paste decreases. Thus, it is considered that in the negative electrode plate having the negative electrode material prepared with the paste, the reactivity is reduced due to a shortage of the active material at a location where fiber clumps are arranged, and as a result, sulfation occurs at a low reactivity location on the negative electrode plate, so that the life characteristics (in particular, PSOC cycle life characteristics) of the lead-acid battery are deteriorated. On the other hand, in the lead-acid battery disclosed in the present specification, an average volume specific resistance value of the fibers contained in the negative electrode material is $10^3$ $\Omega \cdot$cm or more and less than $10^9$ $\Omega \cdot$cm, and the average volume specific resistance value of the fibers is not excessively low or high. Thus, according to the lead-acid battery disclosed in the present specification, it is considered that the life characteristics (in particular, PSOC cycle life characteristics) of the lead-acid battery can be improved.

It is considered that when a content ratio of the fibers in the negative electrode material is excessively low, the negative electrode material cannot be sufficiently restrained by the fibers, so that the effect of preventing the negative electrode material from falling off due to fibers is reduced. On the other hand, it is considered that if the content ratio of the fibers in the negative electrode material is excessively high, the electrical resistance of the fiber is orders of magnitude higher than the electrical resistance of other materials (for example, lead) contained in the negative electrode material, so that the electrical resistance of the negative electrode material increases, and the life characteristics of the lead-acid battery are deteriorated. On the other hand, in the lead-acid battery disclosed in the present specification, the content ratio of the fibers in the negative electrode material is 0.05% by mass or more and 0.40% by mass or less, and the content ratio of the fibers in the negative electrode material is not excessively low or high. Thus, according to the lead-acid battery disclosed in the present specification, it is considered that the life characteristics (in particular, PSOC cycle life characteristics) of the lead-acid battery can be improved while preventing the negative electrode material from falling off from the current collector.

The inventor of the present application has newly found that by adopting a configuration in which the content ratio of the fibers in the negative electrode material, the average length of the fibers, and the average volume specific resistance value of the fibers all satisfy the requirements of the numerical range described above, there is provided such an unpredictable and remarkable effect that it is possible to improve the life characteristics (in particular, PSOC cycle life characteristics) of the lead-acid battery while preventing the negative electrode material from falling off from the current collector in the negative electrode plate.

(2) In the above lead-acid battery, the average volume specific resistance value of the fiber may be less than $10^8$ $\Omega \cdot cm$. According to the present lead-acid battery, it is possible to effectively suppress the generation of the electrostatic attraction when the paste for preparing the negative electrode material is mixed, and the decrease in dispersibility of an additive in the paste is effectively suppressed, so that the life characteristics (in particular, PSOC cycle life characteristics) of the lead-acid battery can be effectively improved.

(3) In the above lead-acid battery, the fiber may be formed of a hydrophilic material. When a fiber formed of a hydrophobic material is used as the fiber contained in the negative electrode material, the fiber does not hydrate with sulfuric acid and water when a paste is mixed for preparing the negative electrode material, and as a result, the dispersibility of the fiber in the paste may not be sufficiently enhanced. Thus, in the negative electrode plate having the negative electrode material prepared with the paste, the reactivity may be reduced due to a shortage of the active material at a location where fiber clumps are arranged, and as a result, sulfation occurs at a low reactivity location on the negative electrode plate, so that the life characteristics of the lead-acid battery may be deteriorated. On the other hand, in the present lead-acid battery, since the negative electrode material contains a fiber formed of a hydrophilic material, the fiber favorably hydrates with sulfuric acid and water when a paste is mixed for preparing the negative electrode material, and as a result, the dispersibility of the fiber in the paste can be sufficiently enhanced. Therefore, according to the lead-acid battery, the life characteristics (in particular, PSOC cycle life characteristics) of the lead-acid battery can be improved effectively.

(4) The above lead-acid battery may further include a housing for accommodating the positive electrode plate and the negative electrode plate, and an electrolyte solution accommodated in the housing, and the electrolyte solution may contain aluminum ions. The inventor of the present application has made intensive studies and as a result newly found that, in the lead-acid battery, the fiber having the above-described configuration is contained in the negative electrode material, and aluminum is contained in the electrolyte solution, whereby charge acceptability is significantly improved. The reason why such an effect can be obtained by employing the configuration as described above is not necessarily clear, but it is considered that this is because the fiber having the above configuration has an effect of increasing the reactivity in the negative electrode plate (reducing a variation in the reactivity).

(5) In the above lead-acid battery, the fiber may be an acrylic fiber. According to the lead-acid battery, a fiber having an average volume specific resistance value of $10^3$ $\Omega \cdot cm$ or more and less than $10^9$ $\Omega \cdot cm$ can be easily obtained.

A. Embodiment:

A-1. Configuration:

(Configuration of lead-acid battery 100)

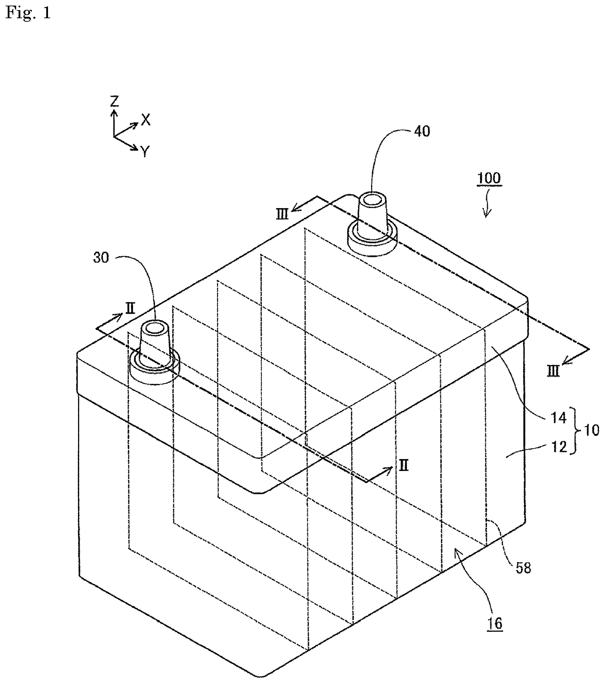

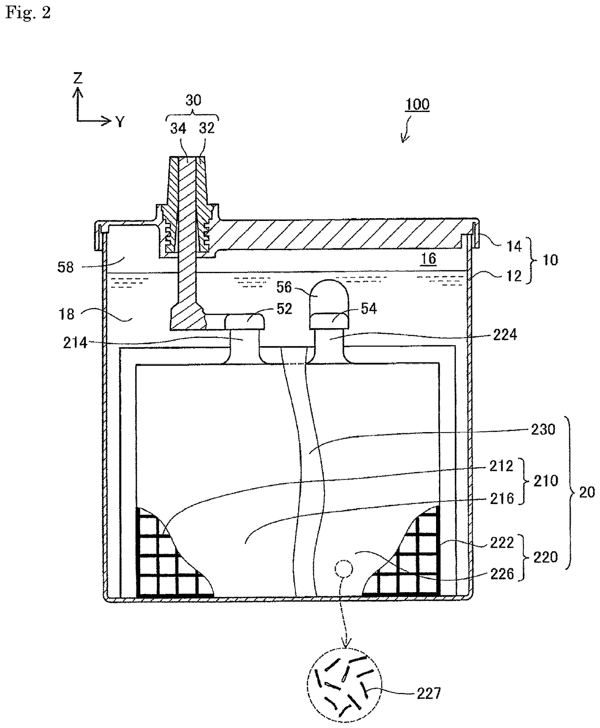

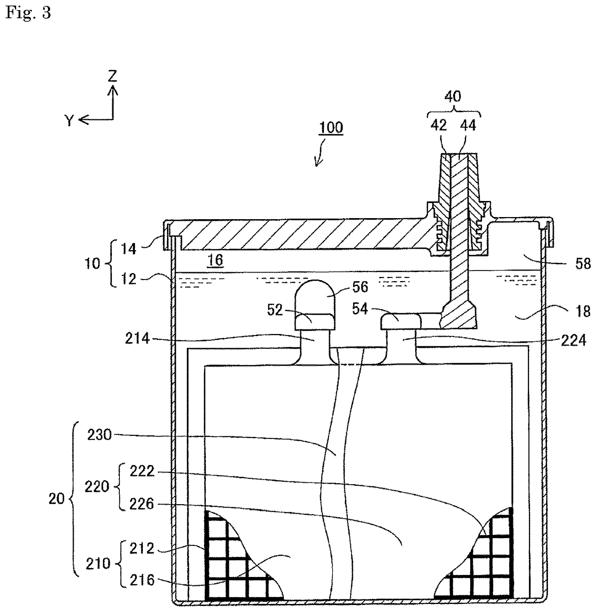

Fig. 1 is a perspective view showing an appearance configuration of a lead-acid battery 100 in the present embodiment. Fig. 2 is an explanatory view showing a Y-Z cross-sectional configuration of the lead-acid battery 100 taken along line II-II of Fig. 1. Fig. 3 is an explanatory view showing a Y-Z cross-sectional configuration of the lead-acid battery 100 taken along line III-III of Fig. 1. In Fig. 2 and Fig. 3, for convenience, as a configuration of an electrode plate group 20 described later is clearly shown, this configuration is represented in a form different from the actual configuration. Figs. 1 to 3 show mutually orthogonal X-axis, Y-axis, and Z-axis for specifying orientation. In the present specification, for the sake of convenience, the positive Z-axis direction is referred to as the "upward direction", and the negative Z-axis direction is referred to as the downward direction; however, in actuality, the lead-acid battery 100 may be disposed in a different orientation.

Since the lead-acid battery 100 can discharge a large current in a short time and, in addition, can exhibit stable performance under various environments, for example, the lead-acid battery 100 is mounted on a vehicle such as an automobile, and is used as a power supply source for a starter at the time of an engine starting and a power supply source for various electric components such as lights. As shown in Fig. 1 to Fig. 3, a lead-acid battery 100 includes a housing 10, a positive electrode-side terminal portion 30, a negative electrode-side terminal portion 40, and a plurality of the electrode plate groups 20. Hereinafter, the positive electrode-side terminal portion 30 and the negative electrode-side terminal portion 40 are also collectively referred to as "terminal portions 30 and 40".

(Configuration of housing 10)

The housing 10 has a container 12 and a lid 14. The container 12 is a substantially rectangular parallelepiped case having an opening on the upper surface and is formed of, for example, a synthetic resin. The lid 14 is a member disposed so as to close the opening of the container 12 and is formed of, for example, a synthetic resin. By bonding a peripheral edge portion of a lower surface of the lid 14 and a peripheral edge portion of the opening of the container 12 by, for example, heat welding, a space in which airtightness from the outside is maintained is formed in the housing 10. The space in the housing 10 is partitioned by a partition 58 into a plurality of (for example, six) cell chambers 16 arranged in a predetermined direction (the X-axis direction in the present embodiment). Hereinafter, the direction (the X-axis direction) in which the plurality of cell chambers 16 are arranged is referred to as "cell arrangement direction".
The single electrode plate group 20 is accommodated in each of the cell chambers 16 in the housing 10. Thus, for example, when the space in the housing 10 is partitioned into the six cell chambers 16, the lead-acid battery 100 includes the six electrode plate groups 20. Each of the cell chambers 16 in the housing 10 accommodates an electrolyte solution 18 containing dilute sulfuric acid, and the entire electrode plate group 20 is immersed in the electrolyte solution 18. The electrolyte solution 18 is injected into the cell chamber 16 from an electrolyte solution filling inlet (not shown) provided in the lid 14. The electrolyte solution 18 preferably contains aluminum ions in addition to diluted sulfuric acid. When the electrolyte solution 18 contains aluminum ions, the content ratio is preferably 0.02 mol/L or more and 0.2 mol/L or less.

(Configuration of electrode plate group 20)

The electrode plate group 20 includes a plurality of positive electrode plates 210, a plurality of negative electrode plates 220, and a separator 230. The plurality of positive electrode plates 210 and the plurality of negative electrode plates 220 are arranged such that the positive electrode plate 210 and the negative electrode plate 220 are alternately arranged. Hereinafter, the positive electrode plate 210 and the negative electrode plate 220 are also collectively referred to as "electrode plates 210 and 220".
The positive electrode plate 210 includes a positive electrode current collector 212 and a positive active material 216 supported by the positive electrode current collector 212. The positive electrode current collector 212 is a conductive member having bones arranged in a substantially lattice or mesh shape, and is formed of, for example, lead or a lead alloy. Furthermore, the positive electrode current collector 212 has near the upper end thereof a positive electrode lug portion 214 protruding upward. The positive active material 216 contains lead dioxide. The positive active material 216 may further include known additives. The positive electrode plate 210 having such a configuration can be produced by, for example, applying or filling a paste for the positive active material mainly composed of lead monoxide, water, and sulfuric acid on or in the positive electrode current collector 212, drying the paste for the positive active material, and then performing a known chemical conversion treatment.
The negative electrode plate 220 includes a negative electrode current collector 222 and a negative active material 226 supported by the negative electrode current collector 222. The negative electrode current collector 222 is a conductive member having bones arranged in a substantially lattice or mesh shape, and is formed of, for example, lead or a lead alloy. Furthermore, the negative electrode current collector 222 has near the upper end thereof a negative electrode lug portion 224 protruding upward. The negative active material 226 contains lead (spongy lead) and a negative electrode fiber 227 described later. The negative active material 226 may further contain other known additives (for example, carbon, lignin, barium sulfate, and the like). The negative electrode plate 220 having such a configuration can be produced by, for example, applying or filling a paste for the negative active material containing lead on or in the negative electrode current collector 222, drying the paste for the negative active material, and then performing a known chemical conversion treatment. The negative active material 226 in the present embodiment is obtained by removing the negative electrode current collector 222 from the negative electrode plate 220, and corresponds to a negative electrode material in the claims.
The separator 230 is formed of an insulating material (for example, glass or synthetic resin). The separator 230 is disposed so as to be interposed between the positive electrode plate 210 and the negative electrode plate 220 adjacent to each other. The separator 230 may be configured as an integral member, or may be configured as a set of a plurality of members provided for each combination of the positive electrode plate 210 and the negative electrode plate 220.
The positive electrode lug portions 214 of the plurality of positive electrode plates 210 constituting the electrode plate group 20 are connected to a positive electrode-side strap 52 formed of, for example, lead or a lead alloy. That is, the plurality of positive electrode plates 210 are electrically connected in parallel via the positive electrode-side strap 52. Similarly, the negative electrode lug portions 224 of the plurality of negative electrode plates 220 constituting the electrode plate group 20 are connected to a negative electrode-side strap 54 formed of, for example, lead or a lead alloy. That is, the plurality of negative electrode plates 220 are electrically connected in parallel via the negative electrode-side strap 54. Hereinafter, the positive electrode-side strap 52 and the negative electrode-side strap 54 are also collectively referred to as "straps 52 and 54".

In the lead-acid battery 100, the negative electrode-side strap 54 accommodated in one cell chamber 16 is connected to the positive electrode-side strap 52 accommodated in the other cell chamber 16 adjacent to one side (for example, the positive X-axis direction side) of the one cell chamber 16 via a connecting member 56 formed of, for example, lead or a lead alloy. The positive electrode-side strap 52 accommodated in the one cell chamber 16 is connected to the negative electrode-side strap 54 accommodated in the other cell chamber 16 adjacent to the other side (for example, the negative X-axis direction side) of the one cell chamber 16 via the connecting member 56. That is, the plurality of electrode plate groups 20 included in the lead-acid battery 100 are electrically connected in series via the straps 52 and 54 and the connecting member 56. As shown in Fig. 2, the positive electrode-side strap 52 accommodated in the cell chamber 16 located at an end on one side (negative X-axis direction side) in the cell arrangement direction is connected to not the connecting member 56, but a positive electrode pole 34 described later. As shown in Fig. 3, the negative electrode-side strap 54 accommodated in the cell chamber 16 located at an end on the other side (positive X-axis direction side) in the cell arrangement direction is connected to not the connecting member 56, but a negative electrode pole 44 described later.

(Configuration of terminal portions 30 and 40)

The positive electrode-side terminal portion 30 is disposed near the end on one side (negative X-axis direction side) in the cell arrangement direction in the housing 10, and the negative electrode-side terminal portion 40 is disposed near the end on the other side (positive X-axis direction side) in the cell arrangement direction in the housing 10.

As shown in Fig. 2, the positive electrode-side terminal portion 30 includes a positive electrode-side bushing 32 and the positive electrode pole 34. The positive electrode-side bushing 32 is a substantially cylindrical conductive member having a hole penetrating vertically, and is formed of, for example, a lead alloy. A lower portion of the positive electrode-side bushing 32 is embedded in the lid 14 by insert molding, and an upper portion of the positive electrode-side bushing 32 protrudes upward from an upper surface of the lid 14. The positive electrode pole 34 is a substantially cylindrical conductive member, and is formed of, for example, a lead alloy. The positive electrode pole 34 is inserted into a hole of the positive electrode-side bushing 32. An upper end of the positive electrode pole 34 is located at substantially the same position as an upper end of the positive electrode-side bushing 32, and is bonded to the positive electrode-side bushing 32 by, for example, welding. A lower end of the positive electrode pole 34 protrudes downward from a lower end of the positive electrode-side bushing 32, and further protrudes downward from the lower surface of the lid 14 and, as described above, is connected to the positive electrode-side strap 52 accommodated in the cell chamber 16 located at the end on one side (negative X-axis direction side) in the cell alignment direction.

As shown in Fig. 3, the negative electrode-side terminal portion 40 includes a negative electrode-side bushing 42 and the negative electrode pole 44. The negative electrode-side bushing 42 is a substantially cylindrical conductive member having a hole penetrating vertically, and is formed of, for example, a lead alloy. A lower portion of the negative electrode-side bushing 42 is embedded in the lid 14 by insert molding, and an upper portion of the negative electrode-side bushing 42 protrudes upward from an upper surface of the lid 14. The negative electrode pole 44 is a substantially cylindrical conductive member, and is formed of, for example, a lead alloy. The negative electrode pole 44 is inserted into a hole of the negative electrode-side bushing 42. An upper end of the negative electrode pole 44 is located at substantially the same position as an upper end of the negative electrode-side bushing 42, and is bonded to the negative electrode-side bushing 42 by, for example, welding. A lower end of the negative electrode pole 44 protrudes downward from a lower end of the negative electrode-side bushing 42, and further protrudes downward from the lower surface of the lid 14 and, as described above, is connected to the negative electrode-side strap 54 accommodated in the cell chamber 16 located at the end on the other side (positive X-axis direction side) in the cell alignment direction.

When the lead-acid battery 100 is discharged, a load (not shown) is connected to the positive electrode-side bushing 32 of the positive electrode-side terminal portion 30 and the negative electrode-side bushing 42 of the negative electrode-side terminal portion 40. An electric power generated by the reaction (reaction in which lead sulfate is generated from lead dioxide) at the positive electrode plate 210 of each of the electrode plate groups 20 and the reaction (reaction in which lead sulfate is generated from lead (spongy lead)) at the negative electrode plate 220 is supplied to the load. When the lead-acid battery 100 is charged, a power source (not shown) is connected to the positive electrode-side bushing 32 of the positive electrode-side terminal portion 30 and the negative electrode-side bushing 42 of the negative electrode-side terminal portion 40. The reaction (reaction in which lead dioxide is generated from lead sulfate) at the positive electrode plate 210 of each of the electrode plate groups 20 and the reaction (reaction in which lead (spongy lead) is generated from lead sulfate) at the negative electrode plate 220 occur, and the lead-acid battery 100 is charged.

A-2. Detailed configuration of negative active material 226:

As shown in Fig. 2, in the lead-acid battery 100 of the present embodiment, the negative active material 226 contains the fiber (hereinafter, referred to as "negative electrode fiber") 227 in addition to lead (spongy lead). The negative electrode fiber 227 is, for example, an acrylic fiber, a polypropylene fiber, a polyester fiber, a polyethylene fiber, a PET fiber, or a rayon fiber. The negative electrode fiber 227 is preferably formed of a hydrophilic material. Here, the hydrophilic material means a material which forms a hydrogen bond with water or whose surface is easily wetted by water. The fiber formed of a hydrophilic material means that the fiber itself is formed of a hydrophilic material, and a surface treatment (for example, a treatment using chemicals or an electrolytic oxidation treatment) is applied to a fiber formed of a hydrophobic material (for example, carbon), whereby a fiber causing hydrophilicity is not contained. Examples of the fiber formed of a hydrophilic material include acrylic fiber, polyester fiber, polyethylene fiber, and rayon fiber.

In the present embodiment, an average length of the negative electrode fibers 227 is 1 mm or more and 6 mm or less. The average volume specific resistance value of the negative electrode fibers 227 is $10^3$ $\Omega \cdot$cm or more and less than $10^9$ $\Omega \cdot$cm. The average volume specific resistance value of the negative electrode fibers 227 is more preferably less than $10^8$ $\Omega \cdot$cm. The content ratio of the negative electrode fiber 227 in the negative active material 226 (ratio of the volume of the negative electrode fiber 227 to the volume of the negative active material 226) is 0.05% by mass (wt%) or more and 0.40% by mass or less. In the following description, such condition that the average length of the negative electrode fibers 227 is 1 mm or more and 6 mm or less, the average volume specific resistance value of the negative electrode fibers 227 is $10^3$ $\Omega \cdot$cm or more and less than $10^9$ $\Omega \cdot$cm, and the content ratio of the negative electrode fiber 227 in the negative active material 226 is 0.05% by mass or more and 0.40% by mass or less is referred to as "specific condition regarding the negative electrode fiber".

The average volume specific resistance value of the negative electrode fibers 227 can be reduced (for example, to less than $10^9$ $\Omega \cdot$cm) by, for example, mixing a conductive material with a fiber substrate.

The average length of the negative electrode fibers 227 contained in the negative active material 226 constituting the negative electrode plate 220 of the lead-acid battery 100 is specified as follows.

(1) The lead-acid battery 100 is disassembled, and the negative electrode plate 220 is collected.
(2) The collected negative electrode plate 220 is washed with water to remove sulfuric acid.
(3) The negative active material 226 is collected from the negative electrode plate 220.
(4) The collected negative active material 226 is dissolved in a mixed solution of nitric acid and hydrogen peroxide.
(5) The solution of (4) is filtered.
(6) About 0.4 g of sample (fiber) from a residue on filter paper is sampled.
(7) The fiber is observed with a microscope, and the length is measured.
(8) The average length of the fibers is calculated.

The average volume specific resistance value of the negative electrode fibers 227 contained in the negative active material 226 constituting the negative electrode plate 220 of the lead-acid battery 100 is specified as follows.

(1) Sampling is performed in the same manner as in the above-described method of specifying the average length of the negative electrode fibers 227.
(2) Surface resistance of the fiber is measured by using a surface resistance meter (YC-103 manufactured by AS ONE Corporation).
(3) The volume specific resistance value of each fiber is calculated by using a conversion formula of surface resistance value ($\Omega$) $\times$ sample thickness (cm) = volume specific resistance value ($\Omega \cdot$cm).
(4) The average volume specific resistance value of the fibers is calculated.

The content ratio of the negative electrode fibers 227 in the negative active material 226 constituting the negative electrode plate 220 of the lead-acid battery 100 is specified as follows.

(1) Sampling is performed in the same manner as in the above-described method of specifying the average length of the negative electrode fibers 227.
(2) The mass of each fiber is measured.
(3) The content ratio of the negative electrode fiber 227 in the negative active material 226 is calculated by using a formula of "total mass of fibers/mass of collected negative active material 226 $\times$ 100 = content ratio".

A-3. Performance evaluation:

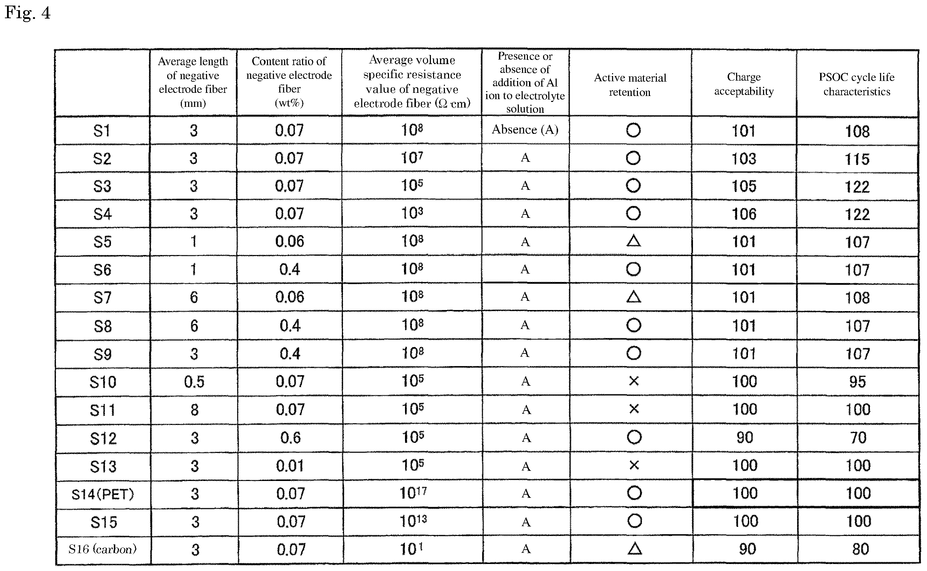

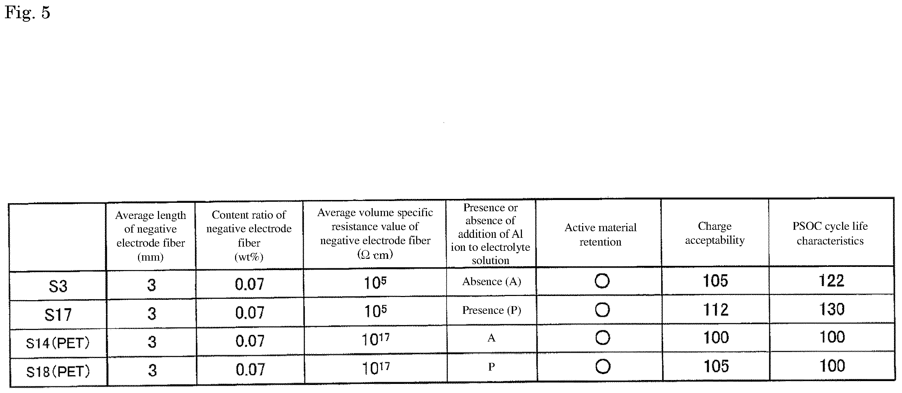

A plurality of samples (S1 to S18) of a lead-acid battery were prepared, and performance evaluation was performed on the samples. Figs. 4 and 5 are explanatory views showing performance evaluation results. For convenience, among the samples S1 to S18, the samples S3 and S14 are shown in both Figs. 4 and 5.

A-3-1. Each sample:

In each sample, similarly to the lead-acid battery 100 of the above embodiment, the negative active material constituting the negative electrode plate contains the negative electrode fibers. In the samples S1 to S13, S15, and S17, as the negative electrode fiber, an acrylic fiber that is a fiber formed of a hydrophilic material is used (not shown in Figs. 4 and 5). In the samples S14 and S18, a PET fiber is used as the negative electrode fiber (see Figs. 4 and 5). In the sample S16, a carbon fiber is used as the negative electrode fiber (see Fig. 4).

The samples differ from each other in the average length and average volume specific resistance value of the negative electrode fibers contained in the negative active material, the content ratio of the negative electrode fiber in the negative active material, and presence or absence of addition of aluminum ions to the electrolyte solution.

Specifically, as shown in Fig. 4, the samples S1 to S9 satisfy the specific condition regarding the negative electrode fiber (such a condition that the average length of the negative electrode fibers is 1 mm or more and 6 mm or less, the content ratio of the negative electrode fiber in the negative active material is 0.05% by mass or more and 0.40% by mass or less, and the average volume specific resistance value of the negative electrode fibers is $10^3$ $\Omega \cdot$cm or more and less than $10^9$ $\Omega \cdot$cm), which is satisfied by the lead-acid battery 100 of the above embodiment. In the samples S1 to S9, aluminum ions were not added to the electrolyte solution.

On the other hand, the samples S10 to S16 do not satisfy the specific condition regarding the negative electrode fiber, which is satisfied by the lead-acid battery 100 of the above embodiment. More specifically, in the sample S10, the average length of the negative electrode fibers is relatively short of 0.5 mm, and in the sample S11, the average length of the negative electrode fibers is relatively long of 8 mm. In the sample S12, the content ratio of the negative electrode fiber in the negative active material is relatively high of 0.6% by mass, and in the sample S13, the content ratio of the negative electrode fiber in the negative active material is relatively low of 0.01% by mass. In the samples S14 and S15, the average volume specific resistance value of the negative electrode fibers is relatively high of $10^{17}$ $\Omega \cdot$cm or $10^{13}$ $\Omega \cdot$cm, and in the sample S16, the average volume specific resistance value of the negative electrode fibers is relatively low of $10^1$ $\Omega \cdot$cm. In the samples S10 to S16, aluminum ions were not added to the electrolyte solution.

As shown in Fig. 5, the sample S17 is different from the sample S3 only in that aluminum ions are added to the electrolyte solution. Similarly, the sample S18 is different from the sample S14 only in that aluminum ions are added to the electrolyte solution. The amount of aluminum ions added to the electrolyte solution in the samples S17 and S18 is 0.1 mol/L.

An aspect ratio (ratio of average length L to average diameter W of fibers (= L/W)) of the negative electrode fiber in each sample was as follows. The average diameter of the negative electrode fiber can be calculated from the aspect ratio of the negative electrode fiber and the average length of the negative electrode fibers shown in Figs. 4 and 5. For example, in the sample S1, since the aspect ratio of the negative electrode fiber is 180 and the average length of the negative electrode fibers is 3 mm, the average diameter of the negative electrode fiber is 0.0167 mm.

- Samples S1 to S4, S9, S12, S13, S17: 180
- Sample S5, S6 : 60
- Sample S7, S8 : 380
- Sample S10 : 30
- Sample S11 : 500
- Sample S14, S18: 225
- Sample S15 : 147
- Sample S16 : 400

In each sample, the positive active material constituting the positive electrode plate contains, as positive electrode fibers, PET fibers having an average volume specific resistance value of $10^{17}$ $\Omega \cdot$cm.

A method for preparing each sample is as follows.

(1) Production of positive electrode plate

A raw material lead powder (a mixture of lead oxide mainly composed of lead and lead monoxide), water, diluted sulfuric acid (density of 1.40 g/cm$^3$), and synthetic resin fibers cut to a predetermined length (hereinafter, referred to as "positive electrode fiber") were mixed to obtain a paste for the positive active material.

The following fibers were used as the positive electrode fibers.

- All samples (S1 to S18): Trade name "Tetron" (PET manufactured by Toray : polyester fiber)

A lead sheet formed of a ternary alloy of lead, calcium, and tin (hereinafter, referred to as a "Pb-Ca-Sn alloy") was subjected to an expanding process, and then a positive electrode grid (positive electrode current collector) was produced.

By filling the paste for the positive active material in an expanded mesh of the positive electrode current collector and aging and drying the paste by a conventional method, an unformed positive electrode plate (height: 115 mm, width: 137.5 mm, thickness: 1.5 mm) was obtained.

(2) Production of negative electrode plate

A raw material lead powder (a mixture of lead oxide mainly composed of lead and lead monoxide), water, diluted sulfuric acid (density of 1.40 g/cm$^3$), synthetic resin fibers cut to a predetermined length (hereinafter, referred to as "negative electrode fiber"), and a predetermined ratio of a negative electrode additive (lignin, carbon, barium sulfate) were mixed to obtain a paste for the negative active material.

The following fibers were used as the negative electrode fibers.

- Samples S1 to S13, S17: Acrylic fiber of the present embodiment
- Samples S14, S18 : Trade name "Tetron" (PET manufactured by Toray : polyester fiber)
- Sample S15 : Trade name "Vonnel" (acrylic fiber manufactured by Mitsubishi Rayon Co., Ltd.)
- Sample S16 : Carbon fiber

In the same manner as the positive electrode grid (positive electrode current collector), a plate lead sheet formed of a Pb-Ca-Sn alloy was subjected to an expanding process, and then a negative electrode grid (negative electrode current collector) was produced.

By filling the paste for the negative active material in an expanded mesh of the negative electrode current collector and, similar to the positive electrode plate, aging and drying the paste by a conventional method, an unformed negative electrode plate (height: 115 mm, width: 137.5 mm, thickness: 1.3 mm) was obtained.

(3) Production of sample battery

Using the positive electrode plate and the negative electrode plate produced in the above (1) and (2), the negative electrode plate was bagged or pouched with a polyethylene separator, and then the positive electrode plate and the bagged or pouched negative electrode plate were alternately stacked. Then, a plurality of the positive electrode plates are welded to each other with leaded components, and a plurality of the negative electrode plates were welded to each other with leaded components, thus producing an electrode plate group.

The electrode plate group was inserted into a resin (polypropylene) container so that six cells were connected in series, the electrode plate groups (five locations) were subjected to intercell welding, and then a resin (polypropylene) lid and the container were bonded. Then, both terminal portions (positive and negative electrode terminal portions) were welded to produce a sample battery.

Thereafter, the battery was initially charged by a conventional method, and then a sample battery having an electrolyte density of 1.285 was obtained.

A-3-2. Evaluation items and evaluation methods:

Using each sample of the lead-acid battery, three items including an active material retention, charge acceptability, and PSOC (Partial State of Charge, incompletely charged state) cycle life characteristics were evaluated.

The active material retention was evaluated as follows. That is, the negative electrode plate after aging and drying was visually confirmed, and when the negative active material was not fallen off at all, it was judged as ○ (excellent). In a case where although falling off of the negative active material was observed, a fall-off amount was less than 1/10 of the area of the negative electrode plate, it was judged as Δ (good). When the fall-off amount of the negative active material was 1/10 or more of the area of the negative electrode plate, it was judged as × (poor).

The charge acceptability was evaluated as follows. That is, for each sample, the following procedures A1 to F1 were executed in an environment maintained at an ambient temperature of 25 ± 2°C, and an amount of chargeable electricity was measured. Assuming that the measured value of the amount of electricity in the sample S14 was 100 (indicated by a thick line in Fig. 4), the measured value of the amount of electricity in each sample was represented by a relative value.

A1 : Charge at a charge voltage of 16 V (maximum current value is limited to 6 A) for 24 hours.
B1 : Stand still for 16 to 24 hours.
C1 : Discharge for 30 minutes at 5 hour rate current value.
D1: Stand still for 16 to 24 hours.
E1: Charge for 10 seconds at a charge voltage of 14. 5V (maximum current value is limited to 100 A).
F1: Charge current values $I_{0.1}$, $I_{0.2}$, $I_{0.3}$, ..., $I_{9.9}$, and $I_{10}$ at intervals of 0.1 second in the charging process of the above E1 (It shows a charge current after t seconds from the start of charge. For example, $I_{0.1}$ indicates a charge current after 0.1 seconds from the start of charge, and $I_{10}$ indicates a charge current after 10 seconds from the start of charge) were measured, and the amount of chargeable electricity was calculated by the following calculation formula. $I_0$ (charge current at the start of charge) was regarded as 100 A.

$$\text{Calculation formula: Electricity amount (A·s)} = (I_0 + I_{0.1})/2 + (I_{0.1} + I_{0.2})/2 + ... + (I_{9.9} + I_{10})/2$$

The PSOC cycle life characteristics were evaluated as follows. That is, for each sample, in an environment maintained at an ambient temperature of $5 \pm 2°C$, OCV transition was measured while executing the following procedures A2 to G2, and after the start of the procedure A2, the number of cycles until OCV reaches less than 12.4 V for the first time was determined as the life of the lead-acid battery. Assuming that the measured value of the life in the sample S14 was 100 (indicated by a thick line in Fig. 4), the measured value of the life in each sample was represented by a relative value. According to the PSOC cycle life characteristics evaluation method, for example, the life characteristics of the lead-acid battery, which is repeatedly charged and discharged in an incompletely charged state, such as a lead-acid battery for a vehicle having an idling stop function, can be evaluated.

A2: Charge at a charge voltage of 16 V (maximum current value is limited to 6 A) for 24 hours.
B2: Discharge at 20 mA for 23 hours and 30 minutes.
C2: Discharge for 59 seconds at 20 hour rate $\times$ 18.3 current value.
D2: Discharge at 300 A for 1 second.
E2: Charge for 60 seconds at a charge voltage of 14. 5V (maximum current value is limited to 100 A).
F2: Repeat the above C2 to E2 15 times.
G2: Return to the above B2.

A-3-3. Evaluation results:

As shown in Fig. 4, all the samples S1 to S9 satisfying the specific condition regarding the negative electrode fiber described above (such a condition that the average length of the negative electrode fibers is 1 mm or more and 6 mm or less, the content ratio of the negative electrode fiber in the negative active material is 0.05% by mass or more and 0.40% by mass or less, and the average volume specific resistance value of the negative electrode fibers is $10^3$ $\Omega \cdot$cm or more and less than $10^9$ $\Omega \cdot$cm) were judged as $\triangle$ (good) or $\bigcirc$ (excellent) in the evaluation of the active material retention, in the evaluation of the charge acceptability, a good result was obtained such that the value was "101" or more, and in the evaluation of the PSOC cycle life characteristics, a good result was obtained such that the value was "107" or more.

On the other hand, the sample S10 not satisfying the specific condition regarding the negative electrode fiber because the average length of the negative electrode fibers was less than 1 mm was judged as $\times$ (poor) in the evaluation of the active material retention. In the sample S10, it is considered that since the average length of the negative electrode fibers is excessively short, each negative electrode fiber is in a state close to powder, and each negative electrode fiber cannot sufficiently restrain the negative active material, so that the active material retention is lowered. In the sample S10, both in the evaluation of the charge acceptability and the evaluation of the PSOC cycle life characteristics, the results were not good. The reason for this is not clear, but it has been clarified that if the average length of the negative electrode fibers is too short, the charge acceptability and the PSOC cycle life characteristics are deteriorated.

The sample S11 not satisfying the specific condition regarding the negative electrode fiber because the average length of the negative electrode fibers exceeded 6 mm was judged as $\times$ (poor) in the evaluation of the active material retention. In the sample S11, it is considered that since the average length of the negative electrode fibers is excessively long, fiber agglomerates (location where there are clumps of the negative electrode fibers) are formed when a paste is mixed for preparing the negative active material, and a location where the amount of negative electrode fibers is excessively small is generated in the prepared negative active material, so that the active material retention is lowered. In the sample S11, both in the evaluation of the charge acceptability and the evaluation of the PSOC cycle life characteristics, the results were not good. The reason for this is not clear, but it has been clarified that if the average length of the negative electrode fibers is too long, the charge acceptability and the PSOC cycle life characteristics are deteriorated.

In the sample S12 not satisfying the specific condition regarding the negative electrode fiber because the content ratio of the negative electrode fiber in the negative active material exceeds 0.40% by mass, in the evaluation of the charge acceptability, a not-good result was obtained such that the value was "90", and in the evaluation of the PSOC cycle life characteristics, a not-good result was obtained such that the value was "70". The electrical resistance of the negative electrode fiber is orders of magnitude higher than the electrical resistance of other materials (for example, lead) contained in the negative active material. In the sample S12, it is considered that since the content ratio of the negative electrode fiber in the negative active material is excessively high, the electrical resistance of the negative active material increases, and as a result, the charge acceptability and the PSOC cycle life characteristics are reduced.

The sample S13 not satisfying the specific condition regarding the negative electrode fiber because the content ratio of the negative electrode fiber in the negative active material was less than 0.05% by mass was judged as $\times$ (poor) in the evaluation of the active material retention. In the sample S13, it is considered that since the content ratio of the negative electrode fiber in the negative active material is excessively low, the negative active material cannot be sufficiently restrained by the negative electrode fiber, so that the active material retention is lowered.

In the samples S14 and S15 not satisfying the specific condition regarding the negative electrode fiber because the average volume specific resistance value of the negative electrode fiber is $10^9$ $\Omega \cdot$cm or more, in the evaluation of the charge acceptability, a not-good result was obtained such that the value was "100", and in the evaluation of the PSOC cycle life characteristics, a not-good result was obtained such that the value was "100". In the samples S14 and S15, since the average volume specific resistance value of the negative electrode fibers is excessively high, when a paste is mixed for preparing the negative active material, surfaces of the negative electrode fiber and an additive (for example, carbon, lignin, or barium sulfate) other than the negative electrode fiber are likely to be charged by friction, so that the additive is likely to aggregate due to generation of an electrostatic attraction, and dispersibility of the additive in the paste is reduced. Thus, in the samples S14 and S15, it is considered that in the negative electrode plate having the negative active material prepared with the paste, the reactivity is reduced at a location where the additive is insufficient, and as a result, while the reactivity on the entire negative electrode plate is reduced to reduce the charge acceptability of the lead-acid battery, sulfation (crystallization of lead sulfate) occurs at a low reactivity location on the negative electrode plate, so that the PSOC cycle life characteristics are deteriorated.

In the sample S 16 not satisfying the specific condition regarding the negative electrode fiber because the average volume specific resistance value of the negative electrode fibers is less than $10^3$ $\Omega \cdot$cm, in the evaluation of the charge acceptability, a not-good result was obtained such that the value was "90", and in the evaluation of the PSOC cycle life characteristics, a not-good result was obtained such that the value was "80". In the sample S16, since the average volume specific resistance value of the negative electrode fibers is excessively low, when a paste is mixed for preparing the negative active material, the fiber itself is likely to aggregate, and as a result, the dispersibility of the fiber in the paste decreases. Thus, in the sample S16, it is considered that in the negative electrode plate having the negative active material prepared with the paste, the reactivity is reduced due to a shortage of the active material at a location where fiber clumps are arranged, and as a result, while the reactivity on the entire negative electrode plate is reduced to reduce the charge acceptability of the lead-acid battery, the sulfation occurs at a low reactivity location on the negative electrode plate, so that the PSOC cycle life characteristics are deteriorated.

Thus, according to this performance evaluation, it has been confirmed that when the negative active material contains the negative electrode fiber, and, at the same time, the negative electrode fiber satisfies the above-described specific condition (such a condition that the average length of the negative electrode fibers is 1 mm or more and 6 mm or less, the content ratio of the negative electrode fiber in the negative active material is 0.05% by mass or more and 0.40% by mass or less, and the average volume specific resistance value of the negative electrode fibers is $10^3$ $\Omega \cdot$cm or more and less than $10^9$ $\Omega \cdot$cm), charge characteristics and the PSOC cycle life characteristics can be improved while preventing the negative active material (negative electrode material) from falling off from the negative electrode current collector in the negative electrode plate.

In this performance evaluation, among the samples S1 to S9 whose results were good in all evaluation items, the samples S2 to S4 had an average volume specific resistance value of the negative electrode fibers of less than $10^8$ $\Omega \cdot$cm. In these samples, in the evaluation of the charge acceptability, a very good result was obtained such that the value was "103" or more, and in the evaluation of the PSOC cycle life characteristics, a very good result was obtained such that the value was "115" or more. According to this result, it has been confirmed that in the lead-acid battery, when the specific condition regarding the negative electrode fiber described above is satisfied and, at the same time, the average volume specific resistance value of the negative electrode fibers contained in the negative active material is less than $10^8$ $\Omega \cdot$cm, it is possible to effectively suppress the generation of the electrostatic attraction when the paste for preparing the negative active material is mixed, and the decrease in dispersibility of an additive in the paste is effectively suppressed, so that the charge characteristics and the PSOC cycle life characteristics can be effectively improved while preventing the negative active material from falling off from the negative electrode current collector in the negative electrode plate. Therefore, it can be said that it is more preferable that in the lead-acid battery, the specific condition regarding the negative electrode fiber is satisfied, and the average volume specific resistance value of the negative electrode fibers contained in the negative active material is less than $10^8$ $\Omega \cdot$cm.

As shown in Fig. 5, referring to the evaluation results of the samples S3 and S17, it has been confirmed that when the specific condition regarding the negative electrode fiber described above is satisfied, addition of aluminum ions to the electrolyte solution significantly improves the evaluation result of the charge acceptability (increases the value from "105" to "112") and significantly improves the evaluation result of the PSOC cycle life characteristics (increases the value from "122" to "130"). Referring to the evaluation results of the samples S14 and S18 not satisfying the specific condition regarding the negative electrode fiber described above (more specifically, the average volume specific resistance value of the negative electrode fibers is $10^9$ $\Omega \cdot$cm or more), it has been confirmed that when the specific condition regarding the negative electrode fiber is not satisfied, even if aluminum ions are added to the electrolyte solution, the evaluation result of the charge acceptability is not improved so much (the value just increases from "100" to "105"), and the evaluation result of the PSOC cycle life characteristics is not improved (the value is kept at "100"). That is, it has been confirmed that in the lead-acid battery satisfying the specific condition regarding the negative electrode fiber, the effect of improving the charge characteristics and the PSOC cycle life characteristics due to the addition of aluminum ions to the electrolyte solution is significantly high. The reason for this is not necessarily clear, but is presumed to be because the negative electrode fiber satisfying the above-described specific condition has an effect of increasing the reactivity in the negative electrode plate (reducing a variation in the reactivity). Therefore, it can be said that it is more preferable that the lead-acid battery satisfies the specific condition regarding the negative electrode fiber and that the electrolyte solution contains aluminum ions. The amount of aluminum ions added to the electrolyte solution is preferably 0.02 mol/L or more and 0.2 mol/L or less.

In the samples S1 to S9, an acrylic fiber was used as the negative electrode fiber. If an acrylic fiber is used as the negative electrode fiber, a fiber having an average volume specific resistance value of $10^3$ $\Omega \cdot$cm or more and less than $10^9$ $\Omega \cdot$cm can be easily obtained.

In this performance evaluation, although acrylic fiber was used as the negative electrode fiber satisfying the above-described specific condition, even when other fibers (polypropylene fiber, polyester fiber, polyethylene fiber, PET fiber, rayon fiber) were used, if the negative electrode fiber satisfies the above-described specific condition, similarly it is strongly presumed that the charge characteristics and the PSOC life characteristics can be improved while preventing the negative active material (negative electrode material) from falling off from the negative electrode current collector in the negative electrode plate.

In this performance evaluation, an acrylic fiber which was a fiber formed of a hydrophilic material was used as the negative electrode fiber satisfying the above-described specific condition. It is more preferable because it is considered that when a fiber formed of a hydrophilic material is used as the negative electrode fiber, the fiber favorably hydrates with sulfuric acid and water when a paste is mixed for preparing the negative electrode material, so that the decrease in the dispersibility of the fiber in the paste is suppressed, and the charge characteristics and the PSOC cycle life characteristics of the lead-acid battery are effectively improved. Examples of the fiber formed of a hydrophilic material include polyester fiber, polyethylene fiber, and rayon fiber, in addition to acrylic fiber.

B. Modifications:

The technique disclosed in the present specification is not limited to the above embodiment, but may be modified to various other forms without departing from the gist thereof; for example, the following modifications are possible.

The configuration of the lead-acid battery 100 in the above embodiment is merely an example, and can be variously modified. For example, in the above embodiment, although the acrylic fiber, the polypropylene fiber, the polyester fiber, the polyethylene fiber, the PET fiber, and the rayon fiber are exemplified as the negative electrode fiber 227, the negative electrode fiber 227 may be another type of fiber.

In the lead-acid battery 100 in the above embodiment, the positive active material 216 constituting the positive electrode plate 210 may contain positive electrode fibers having the same configuration as the negative electrode fibers 227.

The method of producing the lead-acid battery 100 in the above embodiment is merely an example, and can be variously modified.

DESCRIPTION OF REFERENCE SIGNS

10: Housing
12: Container

14: Lid
16: Cell chamber
18: Electrolyte solution
20: Electrode plate group
30: Positive electrode-side terminal portion
32: Positive electrode-side bushing
34: Positive electrode pole
40: Negative electrode-side terminal portion
42: Negative electrode-side bushing
44: Negative electrode pole
52: Positive electrode-side strap
54: Negative electrode-side strap
56: Connecting member
58: Partition
100: Lead-acid battery
210: Positive electrode plate
212: Positive electrode current collector
214: Positive electrode lug portion
216: Positive active material
220: Negative electrode plate
222: Negative electrode current collector
224: Negative electrode lug portion
226: Negative active material
227: Negative electrode fiber
230: Separator

**Claims**

1. A lead-acid battery comprising:

   a positive electrode plate; and
   a negative electrode plate having a current collector and a negative electrode material supported by the current collector,
   wherein the negative electrode material contains a fiber at a ratio of 0.05% by mass or more and 0.40% by mass or less,
   an average length of the fiber is 1 mm or more and 6 mm or less, and
   an average volume specific resistance value of the fiber is $10^3$ $\Omega \cdot$cm or more and less than $10^9$ $\Omega \cdot$cm.

2. The lead-acid battery according to claim 1, wherein the average volume specific resistance value of the fiber is less than $10^8$ $\Omega \cdot$cm.

3. The lead-acid battery according to claim 1 or 2, wherein the fiber comprises a hydrophilic material.

4. The lead-acid battery according to any one of claims 1 to 3, further comprising:

   a housing for accommodating the positive electrode plate and the negative electrode plate; and
   an electrolyte solution accommodated in the housing,
   wherein the electrolyte solution contains an aluminum ion.

5. The lead-acid battery according to any one of claims 1 to 4, wherein the fiber is an acrylic fiber.

Fig. 1

Fig. 2

Fig. 3

Fig. 4

| | Average length of negative electrode fiber (mm) | Content ratio of negative electrode fiber (wt%) | Average volume specific resistance value of negative electrode fiber ($\Omega$ cm) | Presence or absence of addition of Al ion to electrolyte solution | Active material retention | Charge acceptability | PSOC cycle life characteristics |
|---|---|---|---|---|---|---|---|
| S1 | 3 | 0.07 | $10^8$ | Absence (A) | ○ | 101 | 108 |
| S2 | 3 | 0.07 | $10^7$ | A | ○ | 103 | 115 |
| S3 | 3 | 0.07 | $10^5$ | A | ○ | 105 | 122 |
| S4 | 3 | 0.07 | $10^3$ | A | ○ | 106 | 122 |
| S5 | 1 | 0.06 | $10^8$ | A | △ | 101 | 107 |
| S6 | 1 | 0.4 | $10^8$ | A | ○ | 101 | 107 |
| S7 | 6 | 0.06 | $10^8$ | A | △ | 101 | 108 |
| S8 | 6 | 0.4 | $10^8$ | A | ○ | 101 | 107 |
| S9 | 3 | 0.4 | $10^8$ | A | ○ | 101 | 107 |
| S10 | 0.5 | 0.07 | $10^5$ | A | × | 100 | 95 |
| S11 | 8 | 0.07 | $10^5$ | A | × | 100 | 100 |
| S12 | 3 | 0.6 | $10^5$ | A | ○ | 90 | 70 |
| S13 | 3 | 0.01 | $10^5$ | A | × | 100 | 100 |
| S14(PET) | 3 | 0.07 | $10^{17}$ | A | ○ | 100 | 100 |
| S15 | 3 | 0.07 | $10^{13}$ | A | ○ | 100 | 100 |
| S16 (carbon) | 3 | 0.07 | $10^1$ | A | △ | 90 | 80 |

EP 3 657 582 A1

Fig. 5

| | Average length of negative electrode fiber (mm) | Content ratio of negative electrode fiber (wt%) | Average volume specific resistance value of negative electrode fiber $(\Omega \cdot cm)$ | Presence or absence of addition of Al ion to electrolyte solution | Active material retention | Charge acceptability | PSOC cycle life characteristics |
|---|---|---|---|---|---|---|---|
| S3 | 3 | 0.07 | $10^5$ | Absence (A) | ◯ | 105 | 122 |
| S17 | 3 | 0.07 | $10^5$ | Presence (P) | ◯ | 112 | 130 |
| S14(PET) | 3 | 0.07 | $10^{17}$ | A | ◯ | 100 | 100 |
| S18(PET) | 3 | 0.07 | $10^{17}$ | P | ◯ | 105 | 100 |

## INTERNATIONAL SEARCH REPORT

International application No.

PCT/JP2018/026256

### A. CLASSIFICATION OF SUBJECT MATTER
Int. Cl. H01M4/62(2006.01)i, H01M4/14(2006.01)i, H01M10/08(2006.01)i

According to International Patent Classification (IPC) or to both national classification and IPC

### B. FIELDS SEARCHED

Minimum documentation searched (classification system followed by classification symbols)
Int. Cl. H01M4/62, H01M4/14, H01M10/08

Documentation searched other than minimum documentation to the extent that such documents are included in the fields searched
Published examined utility model applications of Japan     1922-1996
Published unexamined utility model applications of Japan   1971-2018
Registered utility model specifications of Japan           1996-2018
Published registered utility model applications of Japan   1994-2018

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2000-36305 A (SHIN-KOBE ELECTRIC MACHINERY CO., LTD.) 02 February 2000, claims, paragraphs [0007]-[0017] (Family: none) | 1-3 |
| Y | | 1-4 |
| X | JP 6-103978 A (SHIN-KOBE ELECTRIC MACHINERY CO., LTD.) 15 April 1994, claims, paragraphs [0003]-[0005], [0010], examples (Family: none) | 1-3 |
| Y | | 1-5 |
| X | JP 59-33760 A (YUASA BATTERY CO., LTD.) 23 February 1984, claims, page 1, right column, to page 2, right column (Family: none) | 1-3 |
| Y | | 1-5 |

☒  Further documents are listed in the continuation of Box C.          ☐  See patent family annex.

\*      Special categories of cited documents:
"A"   document defining the general state of the art which is not considered to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
|---|---|
| 17.08.2018 | 28.08.2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**INTERNATIONAL SEARCH REPORT**

International application No.

PCT/JP2018/026256

C (Continuation).  DOCUMENTS CONSIDERED TO BE RELEVANT

| Category* | Citation of document, with indication, where appropriate, of the relevant passages | Relevant to claim No. |
|---|---|---|
| X | JP 61-45565 A (YUASA BATTERY CO., LTD.) 05 March 1986, claims, page 1, left column, to page 2, right column (Family: none) | 1-3 |
| Y |  | 1-5 |
| Y | JP 2006-4688 A (SHIN-KOBE ELECTRIC MACHINERY CO., LTD.) 05 January 2006, claims, paragraphs [0016]-[0027], examples (Family: none) | 1-5 |
| Y | JP 10-246173 A (SHIN-KOBE ELECTRIC MACHINERY CO., LTD.) 11 September 1998, claims, paragraphs [0012], [0013], examples (Family: none) | 1-5 |
| Y | JP 2012-123964 A (GS YUASA INTERNATIONAL LTD.) 28 June 2012, claims, examples (Family: none) | 1-5 |
| Y | WO 2016/114315 A1 (HITACHI CHEMICAL CO., LTD.) 21 July 2016, claims, paragraphs [0080], [0098]-[0100], examples (Family: none) | 1-5 |
| A | JP 2003-338278 A (MATSUSHITA ELECTRIC INDUSTRIAL CO., LTD.) 28 November 2003, claims, paragraphs [0003]-[0005], [0019], examples (Family: none) | 1-5 |
| A | JP 2012-174342 A (GS YUASA INTERNATIONAL LTD.) 10 September 2012, paragraphs [0002], [0003], examples (Family: none) | 1-5 |
| A | JP 2007-328979 A (MATSUSHITA ELECTRIC INDUSTRIAL CO., LTD.) 20 December 2007, paragraphs [0005]-[0008], [0022]-[0025], examples, comparative examples, paragraph [0047] (Family: none) | 1-5 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000036305 A